Europäisches Patentamt

European Patent Office

Office européen des brevets

(11) Publication number: **0 250 592 B1**

# EUROPEAN PATENT SPECIFICATION

(45) Date of publication of patent specification: **18.09.91**  (51) Int. Cl.⁵: **C04B 35/58**

(21) Application number: **86900259.2**

(22) Date of filing: **20.12.85**

(86) International application number:
**PCT/JP85/00699**

(87) International publication number:
**WO 87/03866 (02.07.87 87/14)**

(54) CERAMICS CONTAINING ALPHA-SIALON.

(43) Date of publication of application:
**07.01.88 Bulletin 88/01**

(45) Publication of the grant of the patent:
**18.09.91 Bulletin 91/38**

(84) Designated Contracting States:
**AT DE FR GB SE**

(56) References cited:
**EP-A- 0 124 989**

(73) Proprietor: **RESEARCH DEVELOPMENT COR-PORATION OF JAPAN**
**5-2, Nagata-cho 2-chome**
**Chiyoda-ku Tokyo 100(JP)**

Proprietor: **NATIONAL INSTITUTE FOR RE-SEARCH IN INORGANIC MATERIALS, SCI-ENCE AND TECHNOLOGY AGENCY**
**1, Namiki 1-chome Sakuramura Niihari-gun Ibaraki 305(JP)**

Proprietor: **SHINAGAWA REFRACTORIES CO., LTD.**
**2-1, Ohtemachi 2-chome Chiyoda-ku Tokyo 100(JP)**

(72) Inventor: **MITOMO, Mamoru**
**356-223, Ushiku Ushiku-machi, Inashiki-gun Ibaraki 300-12(JP)**
Inventor: **ISHIZAWA, Kenki**
**394, Higashikatakami Bizen-shi Okayama 705(JP)**

Inventor: **AYUZAWA, Nobuo**
**1935, Inbe Bizen-shi**
**Okayama 705(JP)**
Inventor: **SHIRANITA, Akira**
**1931, Inbe Bizen-shi**
**Okayama 705(JP)**
Inventor: **TAKAI, Masamichi**
**1931, Inbe Bizen-shi**
**Okayama 705(JP)**
Inventor: **UCHIDA, Norimasa**
**390, Higashikatakami Bizen-shi**
**Okayama 705(JP)**

(74) Representative: **Kraus, Walter, Dr. et al**
**Patentanwälte Kraus, Weisert & Partner**
**Thomas-Wimmer-Ring 15**
**W-8000 München 22(DE)**

## Description

### Technological Field

This invention relates to novel α-sialon-containing ceramics, and more specifically, to α-sialon-containing ceramics which have improved mechanical properties and are useful as high-temperature structural materials or for machine tool component parts, cutting tools, etc. which require mechanical strength and abrasion resistance.

### Background Technology

Sialon is a generic term for substances having a basic structure Si-Al-O-N resulting from substitution of Al at the site of Si and O at the site of N in silicon nitride ($Si_3N_4$), and β-sialon and α-sialon are known. β-Sialon results from dissolution and substitution of Al at the site of Si and O at the site of N in the β-$Si_3N_4$ crystal structure, and is produced, for example, by hot-pressing a mixture of $Si_3N_4$, $Al_2O_3$ and AlN, or heating a molded article of this mixture in a nitrogen atmosphere under 1 atmosphere. It is represented by the composition formula $(Si,Al)_6(O,N)_8$ or $Si_{6-z}Al_zN_{8-z}$ where $0<z\leq4.2$).

On the other hand, α-sialon is a substance having a structure resulting from substitution of Al at the site of Si and O at the site of N in an α-$Si_3N_4$ crystal structure and interstitial dissolution of such elements as Li, Mg, Ca and Y between the crystal lattices. It is characterized by being stable at high temperatures. The technology of producing α-sialon sintered bodies (ceramics) was developed by M. Mitomo, one of the present inventors, [see, for example, Yogyo-Kyokai-Shi 85 [8], 50-54 (1977); Japanese Patent Publications Nos. 23346/1983 and 35950/1983]. Later, Hampshire et al., in Nature, 274, 880 (1978), presumed that α-sialon is formed by the dissolution of such elements as Li, Mg, Ca and Y between the lattices of α-$Si_3N_4$ crystals. Furthermore, Grand et al., in J. Mater. Sci., 14, 1749 (1979), analyzed the composition of α-sialon in which Y is dissolved, and suggested the composition formula $Y_x(Si,Al)_{12}(O,N)_{16}$.

α-Sialon ceramics are a material discovered through the above-mentioned course of research. Now, the α-sialon ceramics are expressed by the general formula $M_x(Si\ Al)_{12}(O,N)_{16}$ wherein M represents Li, Mg, Ca, Y or a lanthanide metal element excepting La and Ce, and $0<x\leq2$, pressureless sintering and pressure sintering have been proposed as methods for production thereof (see the Japanese Patent Publications Nos. 23346/1983 and 35950/1983 cited above). The pressureless sintering method which is simple and can be easily applied to the production of complexly shaped products, however, has the disadvantage that about 3 to 5% of pores usually remain in the resulting sintered bodies, and sintered bodies of high strength are difficult to obtain.

The present inventors, therefore, made investigations on a ceramic composition from which an α-sialon-type sintered body of high density and strength can be produced by the pressureless sintering method. These investigations have now led to the discovery of α-sialon-containing ceramics (sintered body) which have better mechanical properties than silicon nitride, silicon carbide and β-sialon and can be produced industrially by the pressureless sintering method, and consequently, to the accomplishment of the present invention.

### Disclosure of the Invention

According to the present invention, there are provided α-sialon-containing ceramics having the following composition expressed as nitrides or oxides

| | |
|---|---|
| $Si_3N_4$ | 82.0-97.4 wt% (84-95 wt%) |
| AlN | 1.6-12.5 wt% (3-10 wt%) |
| $Y_2O_3$ | 1.0-7.5 wt%(1.5-6 wt%) |
| MgO | x wt% |
| CaO | y wt% |
| $Li_2O$ | z wt% |

wherein
$0\leq x,y,z\leq5$ $(0\leq x,y,z\leq2)$,
$0.05\leq x+y+z\leq5$ $(0.1\leq x+y+z\leq3)$,
and all weight percentages are based on the weight of the ceramics,

and consisting substantially of a composite crystal phase of α-sialon and β-silicon nitride (the parenthesized ranges are the preferred ones).

The structural characteristic of the ceramics of the invention is that they have a microstructure in which granular crystals of α-sialon and prismatic crystals of β-silicon nitride form a composite crystal phases structure. Moreover, the α-sialon crystal phase has the chemical composition characterized by including both yttrium and at least one element selected from Mg, Ca and Li as elements which dissolve interstitially.

The proportions of the α-sialon crystal phase and the β-silicon nitride crystal phase present in the ceramics of the invention vary depending upon the manufacturing conditions, particularly upon the types and amounts of the elements which dissolve interstitially. Generally, on the basis of the weight of the ceramics, the proportion of the α-sialon crystal phase is 10 to 90% by weight, preferably 10 to 50% by weight, and the proportion of the β-silicon nitiride crystal phase is 10 to 90% by weight, preferably 50 to 90% by weight. The ceramics of this invention may contain a small amount, for example not more than 5% by weight, of a grain boundary glass phase.

The α-sialon crystal phase in the ceramics of the invention is characterized in that as stated above, it contains both Y and at least one element selected from Mg, Ca and Li, preferably Mg, as the element dissolved in interstitial sites. Specifically, it results from the interstitial dissolution of MgO, CaO and/or $Li_2O$ in Y-α-sialon of the general formula $M_x(Si,Al)_{12}(O,N)_{16}$ in which M representing the element dissolved in interstitial sites is Y. Preferably, the α-sialon crystal phase in this invention can be represented by the following composition formula

$$(Y_m,M_n)(Si,Al)_{12}(O,N)_{16}$$

wherein M is at least one metal selected from Mg, Ca and Li, $0.01 \leq m, n < 0.4$, preferably $0.05 \leq m, n \leq 0.3$, and $0.01 < m + n \leq 0.4$, preferably $0.1 \leq m + n \leq 0.3$.

The ceramics of this invention consisting substantially of a composite structure of a specific α-sialon crystal phase and a specific β-silicon nitride crystal phase have excellent sinterability and can be fired to highly dense products even by the pressureless sintering method. They have very high mechanical strengths, for example flexural strength.

The α-sialon-containing ceramics of this invention having these properties can be produced by a known pressure sintering method (see, for example, Japanese Patent Publication No. 35950/1983) and a known pressureless sintering method (see, for example, Japanese Patent Publication No. 23346/1983). Particularly, the latter pressureless sintering method can be advantageously used.

The α-sialon-containing ceramics of the invention can be produced, for example, by mixing silicon nitride, aluminum nitride, an oxide of Y or a compound convertible to the oxide of Y under sintering conditions, and an oxide of Mg, Ca and/or Li or a compound of Mg, Ca and/or Li convertible to the oxide under sintering conditions in proportions which give the aforesaid nitride or oxide proportions, pulverizing the resulting starting mixture, molding it, and sintering the molded product in an inert gaseous atmosphere (for example in a nitrogen stream).

The compounds containing Y, Mg, Ca and Li convertible to the oxides of these elements under sintering conditions are, for example, inorganic or organic salts containing these elements, such as carbonates, basic carbonates, hydroxides and oxalates, or alkoxides of these elements.

The starting mixture is uniformly pulverized and mixed by using, for example, a vibratory mill, an attrition mill, or a ball mill, and then molded into a predetermined shape. The molding may be carried out by such methods as shaping in a mold, slurry casting, isostatic press forming and injection molding.

The molded product is then covered with a powder containing silicon nitride, such as a powder of silicon nitride alone, or a powder of a mixture of silicon nitride and aluminum nitride, in the case of pressureless sintering, and then sintered in an inert gaseous atmosphere. The heating temperature is generally 1600 to 2000°C, preferably 1650 to 1800°C (in the case of pressureless sintering), or 1750 to 2000°C (in the case of pressure sintering). The sintering time is usually 30 minutes to 10 hours, preferably 1 to 5 hours.

Use of the starting mixture in accordance with this invention permits production of ceramics having sufficient density and mechanical properties by the pressureless sintering method. As required, the pressure sintering method or a two-stage sintering mixture consisting of pressureless sintering and pressure sintering may be used. The pressure sintering may be carried out, for example, by a method in which the pressure of the inert gaseous atmosphere is elevated (gas pressure sintering method), a hot isostatic pressure sintering method, and a hot pressing method. The pressure is generally at least 30 kg/cm², preferably 50 to 2000 kg/cm².

According to the two-stage sintering method, a pre-sintered body obtained by pressureless sintering as described above is re-sintered in a nitrogen stream, for instance, under 100 kg/cm² by the gas pressure sintering method, whereby the mechanical strength of the resulting ceramics can be greatly increased.

In the above manufacturing process, treatments such as material mixing, pulverization, molding and drying, are preferably carried out in an organic solvent in a non-oxidizing atmosphere in order to minimize inclusion of $Al_2O_3$ in the resulting ceramics. It is also desirable to avoid use of $Al_2O_3$-containing ceramics in containers or pulverizing media used in the process.

## Best Mode of Practicing the Invention

The following examples illustrate the present invention more specifically.

EXAMPLE 1

Silicon nitride (particle diameter less than 1 micrometer; cationic impurities less than 0.5%), aluminum nitride (particle diameter less than 1 micrometer; cationic impurities less than 0.5%), yttrium oxide (particle diameter less than 1 micrometer; purity 99.9%), and either highly pure MgO (particle diameter 0.5 micrometer; purity more than 99.5%), highly pure $CaCO_3$ (particle diameter 0.5 micrometer; purity 99.9%) or highly pure $Li_2CO_3$ (particlediameter 0.5 micrometer, purity 99%) were mixed in proportions as the proportions of the nitrides or oxides indicated in Table 1 below, and treated for 5 hours in a vibratory mill lined with silicon nitride ceramics (solvent: hexane; using silicon nitride balls) to obtain a uniform mixture.

The particle size of the mixture was analyzed by the SEM method and the laser scattering method. It was found that the mixture had a particle diameter of less than 1 micrometer, and 80% of the entire particles had a particle diameter of less than 0.5 micrometer. The mixture was molded under a molding pressure of 200 n/cm² by a cold isostatic press, processed into a size of 80 x 80 x 10 mm, and sintered at 1750°C for 2 hours in a nitrogen stream by the pressureless sintering method.

X-ray diffraction analysis led to the determination that the resulting sintered body was composed of a composite structure of an α-sialon crystal phase and a β-silicon nitride crystal phase. Table 1 shows the flexural strength of the resulting sintered body and the proportions of the constituent phases.

Table 1: Properties of ∝-sialon-containing ceramics

| No. | Mixing proportions (wt%) | | | | | | Flexural strength (kg/mm$^2$) | Constituent phases (wt%) (*) | | |
|---|---|---|---|---|---|---|---|---|---|---|
| | Si$_3$N$_4$ | AlN | Y$_2$O$_3$ | MgO | CaO | Li$_2$O | | ∝-sialon | β-Si$_3$N$_4$ | Glass phase |
| Comparison | ① 89.7 | 6.4 | 3.9 | | | | 80 | 42 | 58 | |
| | ② 75.4 | 15.4 | 9.4 | | | | 50 | 100 | | |
| 1 | 93.0 | 2.0 | 4.0 | 1.0 | | | 110 | 10 | 88 | 2 |
| 2 | 92.0 | 2.0 | 5.0 | 1.0 | | | 120 | 25 | 73 | 2 |
| 3 | 92.0 | 4.0 | 2.0 | 2.0 | | | 110 | 30 | 69 | 1 |
| 4 | 91.6 | 5.9 | 1.0 | 1.5 | | | 100 | 45 | 55 | |
| 5 | 91.0 | 2.0 | 2.0 | 5.0 | | | 85 | 38 | 57 | 5 |
| 6 | 90.0 | 5.0 | 3.0 | 2.0 | | | 100 | 29 | 69 | 2 |
| 7 | 89.2 | 7.5 | 1.9 | 1.4 | | | 95 | 60 | 40 | |
| 8 | 89.0 | 3.5 | 7.0 | 0.5 | | | 95 | 30 | 69 | 1 |

- to be continued -

EP 0 250 592 B1

Table 1 (continued)

| No. | Mixing proportions (wt%) | | | | | | Flexural strength (kg/mm$^2$) | Constituent phases (wt%) (*) | | |
|---|---|---|---|---|---|---|---|---|---|---|
| | $Si_3N_4$ | AlN | $Y_2O_3$ | MgO | CaO | $Li_2O$ | | $\alpha$-sialon | $\beta$-$Si_3N_4$ | Glass phase |
| 9 | 86.9 | 8.5 | 3.9 | 0.7 | | | 90 | 60 | 40 | |
| 10 | 90.0 | 4.0 | 4.0 | | 2.0 | | 100 | 34 | 62 | 4 |
| 11 | 89.5 | 6.5 | 3.5 | | 0.5 | | 100 | 45 | 54 | 1 |
| 12 | 87.0 | 6.0 | 2.0 | | 5.0 | | 85 | 48 | 48 | 4 |
| 13 | 86.6 | 8.5 | 3.9 | | 1.0 | | 90 | 60 | 40 | |
| 14 | 91.0 | 5.0 | 1.0 | | 3.0 | 3.0 | 85 | 30 | 68 | 2 |
| 15 | 88.4 | 7.4 | 3.9 | | | 0.2 | 100 | 50 | 50 | |
| 16 | 87.1 | 8.5 | 3.9 | | | 0.5 | 95 | 70 | 30 | |
| 17 | 92.0 | 3.0 | 3.0 | 1.0 | 1.0 | | 90 | 25 | 73 | 2 |
| 18 | 92.0 | 3.0 | 3.0 | 1.0 | | 1.0 | 85 | 34 | 63 | 3 |

(*) Constituent phases : by X-ray diffraction

EXAMPLE 2

The same raw materials as described in Example 1 were used and mixed in the proportions indicated in Table 2 below. The mixture was sintered under the same pressureless sintering conditions as described in Example 1 to prepare a pre-sintered body. It was then re-sintered at 1900°C for 1 hour under a nitrogen stream pressure of 100 kg/cm². 
  The properties of the sintered body are shown in Table 2.

Table 2: Properties of α-sialon-containing ceramics produced in a furnace in the presence of a pressurized atmospheric gas

| No. | Mixing proportions (wt%) | | | | | | Flexural strength (kg/mm²) | Constituent phases (wt%) (*) | | |
|---|---|---|---|---|---|---|---|---|---|---|
| | Si₃N₄ | AlN | Y₂O₃ | MgO | CaO | Li₂O | | α-sialon | β-Si₃N₄ | Glass phase |
| Comparison | ① 89.7 | 6.4 | 3.9 | | | | 90 | 50 | 50 | |
| 19 | 92.0 | 2.0 | 5.0 | 1.0 | | | 130 | 40 | 59 | 1 |
| 20 | 91.6 | 5.9 | 1.0 | 1.5 | | | 110 | 55 | 45 | |
| 21 | 90.0 | 6.0 | 3.5 | 0.5 | | | 120 | 50 | 49 | 1 |
| 22 | 86.9 | 8.5 | 3.9 | 0.7 | | | 115 | 80 | 20 | |
| 23 | 90.0 | 4.0 | 4.0 | | 2.0 | | 105 | 39 | 59 | 2 |
| 24 | 86.6 | 8.5 | 3.9 | | 1.0 | | 100 | 65 | 35 | |
| 25 | 87.1 | 8.5 | 3.9 | | | 0.5 | 120 | 80 | 20 | |

(*) Constituent phases : by X-ray diffraction

**Industrial Utilizability**

α-Sialon-containing ceramics provided by this invention are composed of a composite structure of a specific α-sialon crystal phase and a β-silicon nitride crystal phase and has better sinterability, higher density and higher strength than conventional α-sialon ceramics. They can be advantageously used in such applications as high-temperature structural materials, machine tool component parts and cutting tools.

**Claims**

1. α-Sialon-containing ceramics having the following composition expressed as nitrides or oxides

$$Si_3N_4 \qquad 82.0-97.4 \ wt\%$$
$$AlN \qquad 1.6-12.5 \ wt\%$$
$$Y_2O_3 \qquad 1.0-7.5 \ wt\%$$
$$MgO \qquad x \ wt\%$$
$$CaO \qquad y \ wt\%$$
$$Li_2O \qquad z \ wt\%$$

wherein $0 \leq x,y,z \leq 5$, and $0.05 \leq x + y + z \leq 5$,
and consisting substantially of a composite crystal phase of α-sialon and β-silicon nitride.

2. The α-sialon-containing ceramics as claimed in claim 1 consisting substantially of a composite crystal phase of 10 to 90% by weight of an α-sialon crystal phase represented by the composition formula

$(Y_m,M_n)(Si,Al)_{12}(O,N)_{16}$

wherein M is at least one metal selected from Mg, Ca and Li, $0.01 \leq m,n < 0.4$, and $0.01 < m + n \leq 0.4$, and 10 to 90% by weight of a β-silicon nitride crystal phase.

3. A process for producing the α-sialon-containing ceramics as claimed in claim 1, which comprises mixing silicon nitride, aluminum nitride, an oxide of Y or a compound convertible to the oxide of Y under firing conditions and an oxide of Mg, Ca and/or Li or a compound of Mg, Ca and/or Li convertible to the oxide under firing conditions in proportions which give said nitride or oxide proportions, pulverizing the resulting starting mixture, molding it, and sintering the molded product in an inert gaseous atmosphere at a temperature of 1600 to 2000°C in an atmosphere of an inert gas.

4. The process as claimed in claim 3 wherein the sintering is carried out by a pressureless sintering method or a two-stage sintering method.

**Revendications**

1. Matériaux céramiques contenant du α-sialon, ayant la composition suivante, exprimés en nitrures ou oxydes

$$Si_3N_4 \qquad 82,0-97,4 \ \% \ en \ poids$$
$$AlN \qquad 1,6-12,5 \ \% \ en \ poids$$
$$Y_2O_3 \qquad 1,0-7,5 \ \% \ en \ poids$$
$$MgO \qquad x \ \% \ en \ poids$$
$$CaO \qquad y \ \% \ en \ poids$$
$$Li_2O \qquad z \ \% \ en \ poids$$

où $0 \leq x,y,z \leq 5$ et $0,05 \leq x + y + Z \leq 5$,
et constitués essentiellement d'une phase cristalline composite de $\alpha$-sialon et de $\beta$-nitrure de silicium.

2.  Matériaux céramiques contenant du $\alpha$-sialon selon la revendication 1, constitués essentiellement d'une phase cristalline composite de 10 à 90 % en poids d'une phase cristalline de $\alpha$-sialon représentée par la formule de composition

$$(Y_m,M_n)(Si,Al)_{12}(O,N)_{16}$$

où M est au moins un métal choisi parmi Mg, Ca et Li, $0,01 \leq m,n < 0,4$, et $0,01 < m + n \leq 0,4$, et 10 à 90 % en poids d'une phase cristalline de $\beta$-nitrure de silicium.

3.  Procédé de production des matériaux céramiques contenant du $\alpha$-sialon tels que revendiqués dans la revendication 1, qui consiste à mélanger du nitrure de silicium, du nitrure d'aluminium, **un oxyde de Y** ou un composé transformable en l'oxyde de Y dans les conditions de cuisson et un oxyde de Mg, Ca et/ou Li ou un composé de Mg, Ca et/ou Li transformable en l'oxyde dans les conditions de cuisson, en des proportions qui donnent lesdites proportions de nitrures ou d'oxydes, pulvériser le mélange de départ résultant, le mouler et fritter le produit moulé dans une atmosphère de gaz inerte à une température de 1600 à 2000 °C.

4.  Procédé selon la revendication 3, dans lequel le frittage est effectué par une technique de frittage sans pression ou une technique de frittage à deux stades.

**Patentansprüche**

1.  $\alpha$-Sialon enthaltende Keramiken, **dadurch gekennseichnet,** daß sie die folgende Zusammensetzung, ausgedrückt als Nitride oder Oxide,

| | |
|---|---|
| $Si_3N_4$ | 82,0–97,4 Gew.–% |
| AlN | 1,6–12,5 Gew.–% |
| $Y_2O_3$ | 1,0–7,5 Gew.% |
| MgO | x Gew.–% |
| CaO | y Gew.–% |
| $Li_2O$ | z Gew.–% |

worin $0 \leq x,y,z \leq 5$ und $0,05 \leq x + y + z \leq 5$ haben,
und daß sie im wesentlichen aus einer Verbundkristallphase von $\alpha$-Sialon und $\beta$-Siliciumnitrid bestehen.

2.  $\alpha$-Sialon enthaltende Keramiken nach Anspruch 1, **dadurch gekennzeichnet,** daß sie im wesentlichen aus einer Verbundkristallphase aus 10 bis 90 Gew.-% einer $\alpha$-Sialonkristallphase der Zusammensetzungsformel

$$(Y_m,M_n)(Si,Al)_{12}(O,N)_{16}$$

worin M mindestens ein Metall, ausgewählt aus Mg. Ca und Li, ist, $0,01 \leq m,n \leq 0,4$ und $0,01 \leq m + n \leq 0,4$, und 10 bis 90 Gew.-% einer $\beta$-Silicumnitridkristallphase bestehen.

3.  Verfahren zur Herstellung der $\alpha$-Sialon enthaltenden Keramiken nach Anspruch 1, **dadurch gekennzeichnet,** daß man Siliciumnitrid, Aluminiumnitrid, ein Oxid von Y oder eine unter Brennbedingungen in das Oxid von Y umwandelbare Verbindung und ein Oxid von Mg, Ca und/oder Li oder eine unter Brennbedingungen in das Oxid umwandelbare Verbindung von Mg, Ca und/oder Li in Verhältnismengen, die die genannten Nitrid- oder Oxidverhältnisse ergeben. vermischt, das resultierende Ausgangsgemisch pulverisiert, verformt und daß man das geformte Produkt in einer inerten Gasatmosphäre bei einer Temperatur von 1600 bis 2000°C in einer Atmosphäre eines Inertgases sintert.

4. Verfahren zur Herstellung der $\alpha$-Sialon enthaltenden Keramiken nach Anspruch 3, **dadurch gekennzeichnet,** daß man das Sintern gemäß einem drucklosen Sinterverfahren oder einem zweistufigen Sinterverfahren durchführt.